# EUROPEAN PATENT APPLICATION

(11) **EP 3 296 653 A1**
(43) Date of publication of application: **21.03.2018**
(21) Application number: 16763110.0
(22) Date of filing: 16.05.2016
(51) Int. Cl.: F24F 11/00

(54) **SYSTEM FOR VENTILATING ROOMS AND VEHICLE PASSENGER COMPARTMENTS (VARIANTS)**

(30) Priority: 15.05.2015 RU 2015118205; 04.09.2015 RU 2015137765
(71) Applicant: "Autex" Ltd., Moscow 125315 (RU)
(72) Inventor: KIRPICHNIKOV, Alexei Petrovich, Moscow 117485 (RU); KOVALCHUK, Roman Sergeevich, Moscow 115035 (RU)
(74) Representative: Serravalle, Marco
(86) International application number: PCT/RU2016/000292
(87) International publication number: WO 2016/186534

(57) **Abstract**

The invention can be used for creating an effective ventilation system for building and vehicle interiors in conditions of poor outdoor air quality because of polluted environment and in other cases when it is hard to provide sufficient fresh air supply. The first variant of the claimed system implies that the means of air exhaust from interiors are configured to exhaust predominantly the portions of air exhaled by people or animals indoors. The essence of the second variant of the claimed system is that the exhaust air intakes are placed in the zones of spread or exhaust of the exhaled air stream polluted by respiration products.

## Description

The present invention may be used for constructing selective intelligent ventilation and air conditioning systems for building and vehicle interiors and other similar objects that suppose temporary or permanent presence and movements of people inside them. In particular, the present invention may be used in case of inability to provide sufficient air exchange with external environment due to polluted ambient air or lack of air ducts or lack of drives of appropriate performance or for the purpose of energy saving.

A vehicle ventilation system is known according to application USA N°2015140915 (2015-05-21, B60N2/56) where the clean air is supplied to the rear part of the passenger compartment through an air duct placed in a backrest of the driver's seat and with assistance of a fan placed in a back panel of this seat. Such a system has some serious disadvantages: a significant amount of outdoor air has to be supplied to achieve low concentration of exhalation products in a vehicle or building interior that causes a high energy consumption and makes the system wasteful and moreover this is not always justified and feasible since it requires air ducts with a high carrying capacity, clean outdoor air or powerful filtering means.

Patent USA N°5775987 (A47B13/00, 1998-07-07) describes a system of tobacco smoke elimination in a casino. In this device the indoor air is drawn with a high velocity into the slots protected with a screen against alien items and then it is replaced with ambient or regenerated air. The system is effective for the smoke but it is uneconomical and may not be widely used for living accommodations having the limits on noise characteristics and diameters of vents.

The closest system to the proposed one is a room ventilation system comprising a hood which may be provided with a filter, a wall exhaust fan, a sensing element in form of a group of sensors located at various points in the room and controlling the characteristic parameters of gases in the said room and appropriate control means connected to an output of the sensing element and a control input of the hood, which is also connected via the control means to the wall fan, that allows to keep it switched on until the characteristic parameters reach the thresholds (see WO2014174415 (A1), F24C15/20, 2014-10-30). The known system provides adaptive operation of the means for removal of contaminated air, depending on the concentration of contaminants and gases. However, the said system is not capable to remove selectively the portions of air exhaled by the building interior occupants that necessitates removing and replacing air in large volumes to lower the concentration of impurity to an acceptable level. This reduces the efficiency and increases the energy consumption of the known system, does not allow using ducts of small diameters and increases noise level produced by the known system.

The technical result expected from use of the group of claimed inventions is to provide a greater degree of autonomy of the ventilation system by increasing the efficiency of ventilation if there is no opportunity to ensure an adequate supply of fresh air and therefore to lower energy consumption where such an opportunity exists. An additional effect is elimination of some discomfort that usually accompanies too intensive ventilation.

In the first variant of the claimed ventilation system with extraction of exhalation products and comprising a sensing element connected to an input of the controls of the means of air exhaust or air cleaning in interior, the task set by the invention is achieved due to the sensing element is configured to detect the presence and/or position of people and/or animals indoors (hereafter for short - the occupants) and the means of air exhaust or air cleaning and/or the control means of thereof are adapted to extract or clean mainly the portions of air with the highest content of exhalation products produced by the occupants.

### Such a system may additionally comprise

- The means of air supply to the interior with controls, wherein the air supply means may be made as forming elements for subsequent exhaust of an exhaled air stream or with ability to replace the air portion just extracted by the means of air exhaust or be provided with an input analyzer of outdoor air composition that is connected to the controls of the means of air supply to the interior;
- The means of air exhaust from the interior and/or the means of air supply means to the interior may be configured to adapt to the respiratory rhythm of the occupants and/or to delay of spread of inhaled and exhaled air portions;
- The means of air exhaust from the interior may be also provided with forming elements for subsequent extraction of the air streams exhaled by the occupants;
- The air inlets of the means of air supply to the interior may be placed to take the cleanest ambient air and the sensing element may be formed by a group of sensors monitoring the content or partial pressure of gases and vapors indoors, such as a group of sensors like a carbon dioxide (CO₂) sensor and/or oxygen (O₂) sensor and/or humidity sensor and/or pressure sensor and/or infrared radiation sensor and/or temperature sensor and/or sound and ultrasound sensor and/or video sensor (one or plurality of camcorders) and/or motion sensor;
- the sensors of the group may be provided with an output filter tuned to the respiratory rate bandwidth;
- the controls of the means of air exhaust from the interior and/or the controls of the means of air supply to the interior and/or the means for adapting to the respiratory rhythm of the occupants and/or to delay in spreading of portions of exhaled and inhaled air, the controls of the forming elements of the means of flow formation and subsequent extraction of the exhaled air streams and/or the means for choosing and analyzing information from the group of sensors and/or the means for filtering the output information from the group of sensors and/or the information processing unit for the analyzer of the ambient air composition may be combined into a controller or may be a part of the (central) controller that controls operation of the ventilation system;
- the sensing element and the controller may be performed with ability to recognize the absence of the occupants indoors and the controller may be configured to send a command about graded increase of venting intensity to the means of air exhaust or air cleaning and/or to the means of air supply in the interior;
- the controller may be configured to recognize a presence or absence of the occupants indoors based on the signal about an increase or decrease of the carbon dioxide (CO₂) concentration indoors from the corresponding sensor regardless of a content, presence or absence of information from the other sensors and information sources;
- the system may be provided with devices to record and analyze background sounds and may be configured to passively and/or actively reduce the noise of the means of air exhaust or air supply based on the recorded background sound pattern;
- in addition, according to the first variant of the ventilation system, the location of the means of air exhaust from the interior may be adapted to the usual location of the occupants indoors and/or to their movements in the interior or to the directions of their respiration based on the terms of not overlaying of the exhaust air streams;
- the location of the means of air supply in the interior may be also adapted to the usual location and/or movements of the occupants indoors;
- the means of air exhaust and/or the means of air supply may be performed fully or partially as elements of sports exercise equipment and/or of furniture placed in the interior, wherein the air ducts of the means of air exhaust from the interior or the air ducts of the means of air supply to the interior may comprise the air recuperation devices and the means of air exhaust and/or the means of air supply may be partially or completely performed as elements of a window unit;

To resolve the task set by the invention in the second variant of the claimed ventilation system for building and vehicle interiors comprising the means of fresh air supply and the means of air exhaust the latter are proposed to configure as the means for extracting the air polluted by exhalation products, wherein their air intakes are placed in a zone of spread of exhaled air stream.

The zone of spread of the exhaled air stream may be formed by the means of flow formation placed in the area of direct spread of the exhaled air, wherein the means of flow formation may be configured as elements of the air supply means including the clean air supply means or the means of air recirculation for already extracted air polluted by exhalation products; the air outlets may be placed in the zone of spread of the exhaled air flow which belongs to nasal and/or mouth type of breathing; the means to exhaust the air polluted by products of respiration may be made with ability of periodic actuation or controllable and the ventilation system may be provided with a respiration sensor connected to a control input of the said means, wherein the respiration sensor is made as a carbon dioxide (CO₂) sensor or a humidity sensor or a respiration rate meter; the means to exhaust the air polluted by products of respiration may be configured to monitor the position of the respiration organs of the living beings in the interior.

The said sensing element allows to register, detect the presence of the occupants indoors (the staff in the office room, the passengers in the vehicle interior, etc.) and not only the fact of the presence but the particular location (position) in space of the room that is necessary for subsequent more effective capture of air going out from the respiratory organs. In case of a vehicle, for example, it may be detected on a signal of the ignition switch or of the fastened seat belt. Of course, the fact of the presence of people can be also registered by the controls of the means of air exhaust or indoor air cleaning on information received from the sensing element (for cars - the internal circulation mode button, for example). The easiest way is to perform a universal sensing element in the form of video camera (video cameras) recording a position and movement or in form of other motion sensors. Furthermore, the presence of people indoors can be detected directly on excess of partial concentration of the exhalation products in the room or in its local zones.

And the air cleaning may be carried out both within the interior (by filtering, absorption, regeneration) and beyond.

One of the important use of the claimed invention is the use thereof in a fitness room. The points and directions of intensive emission of carbon dioxide are known and defined a priori (by sports training apparatus position in the fitness room) and the sensing element may just comprise a sensor of switch-on of the sports exercise equipment (it may be a power switch of a simulator) and a signal conductor connecting an output of the sensor with the controls of the local means of air exhaust, also via Bluetooth or otherwise. It may be expedient to retrofit the sports exercise equipment (e.g., to equip the front of a treadmill or an exercise bike with air outlets) in order to give them the functions of ventilation system elements.

Same goes for reading rooms, lounges and cinema halls, where individual places are equipped with lifting seats with contact sensors or control panels for individual lighting, sound, etc., the signals of which can serve the purpose of determining the presence of the person and his/her position is a priori known then.

Essentially the first variant of the proposed system is a kind of selective interior ventilation system based on detection and extraction of only (mainly) a local portion of an exhaled stream (directed from a nose and a mouth of a human or an animal - of an occupant) and subsequent replacement of this particular portion with outdoor (ambient) or regenerated air. To formulate it shorter - the means of air exhaust in the claimed proposal are focused on monitoring and removing primarily the air, which has already been in the lungs of people, and on local removal of exhalation products in contrast to the known means of cleaning by use of not selective, integrated ventilation systems. Such selectivity many times reduces the requirements for necessary volumes for forced ventilation or for regeneration and cleaning performance (membrane filters, oxygen generators and so on), that among other benefits allows to solve the problem of cleaning the supplied outdoor air (including possibility of using the bactericidal filters, thermosyphons etc.) with much better quality. Furthermore, it should be understood that the system according to the first variant may operate both independently and as part of a more complex ventilation system and may be either supplemented with the means of air supply to the interior or may operate in conditions of natural air inflow.

In this case when we speak about placement of air inlet ducts in the area of low polluted air we keep in mind that the first variant of the claimed system essentially provides minimization of air flow supplied to the room. In turn, this allows minimizing a supply air duct in its cross section and making it, for example, in form of a flexible hose with a small cross-section that may be stretched to the area where the air is most fresh, in particular to the area of free movement of air masses. Such type of construction is especially important for basements and low-rise buildings, where the air inputs of individual ventilation systems are set on low roofs and walls that may face roadways, parking places, garbage containers and other sources of pollution. Furthermore, the system according to the first variant additionally allows not only to solve a problem of isolating the room from an ambient noise accompanying the ventilation process (for example, by means of special construction of an air duct of a small cross-section, active noise reduction in spaces and in an exhaust air duct), but in contrast to the analogues, it adapts its own efficiency and noise characteristics (in dependence on the presence and behavior of the occupants in the surrounding space, time and other information).

The primarily extraction of exhaled air portions means that the system is adapted to remove exactly the exhaled air, i.e. the portions of air with maximum content of carbon dioxide and water vapors and low content of oxygen. It is important to emphasize that the first variant of claimed ventilation system may replace the air exhausted from the room with ambient (outdoor) air and/or with regenerated air in any proportion determined by the said controls which are performed in this part like in known ventilation and air-conditioning systems for building interiors. It should be noted that the creation of even a minimal overpressure inside, for example, by pumping the cleaned external inflow solves the problem of extraneous (idle, parasitic) sucking uncontrolled outside air leaking through cracks and improves the indoor environment.

In the context of urban environment and closed spaces it often seems reasonable for the ventilation system to operate in a mode of isolation from the external environment (i.e. almost without inflow of outdoor air) for rather long time. Such a reason may be a traffic jam that lasts for many hours right in front of low-rise building windows or the wind direction from the side of closely spaced industrial tubes (chimneys), etc. (in these situations the people try to close the windows for a while as a minimum to improve the air isolation of the interior).

Although the oxygen reserve in the room may be sufficient for a few people for tens hours, the effect of stuffiness and later of poisoning appears much earlier (in 0.5-1 hour) due to an unacceptable increase of carbon dioxide (CO₂) concentration. This happens due to the fact that the concentration of carbon dioxide (CO₂) in ambient air is about 0,04...0,1% and the value of 0,5% is already harmful for an ability to concentrate and working capacity while the air exhaled by a person (or an animal) contains 3-4% of carbon dioxide (CO₂). Although the claimed solution significantly improves the situation, this may not be enough. Then, as noted above, the system according to the first variant may have a reservoir to store some volume of purified (clean) air or oxygen. The controls of the means of air supply to the room initiate replenishing the reserves stored in the reservoir (of course, using an appropriate system of valves and the controls thereof).

And extraction (removal) of exhalation products may be executed in any known way, in particular the controller of the control means may control mechanisms changing position and direction of one or more air intake means and/or filter elements and may commutate a plurality of stationary means, and various combinations of these approaches are possible.

In an aspect of practical implementation, the first variant of the proposed ventilation system may essentially comprise:
- a sensing element providing the recognition of the fact of exhalation by one or more occupants;
- means of air exhaust from the interior with ability to remove only (mainly) portions of exhaled air;
- means of air supply to the interior, if necessary;
- control means (as a rule combined with the means of recognition) that control the said means of air exhaust and the means of air supply.

Under the control means is to be understood any modifications and variations thereof, including a single controller, a plurality of controllers exchanging the signals and information, individual circuits (single schemes, separated schemes), blocks and control units, etc.

A feature of the sensing element is that it is designed to register an exhalation in one way or another. In this case, the means of detecting the presence of people indoors are not than other as a part of the means for exhalation registration, exactly for the detection and subsequent removal of portions of the exhaled air - the control means should receive the information about the presence of people in the room as in this case the signals from the other sensors can be interpreted otherwise, more reliably and unambiguously.

The output signal of the sensing element may be used directly or after analysis and processing, with or without a delay, - for actuation of the means of air exhaust for removing a portion (stream) of air exhaled by one or more people in the room with an increased content of carbon dioxide (CO₂) and water vapors.

It is supposed that if there is a certain distance between the means of air exhaust (air supply) - such as, for example, outlets (inlets), sockets, blinds, shutters or nozzles - and respiratory organs of the occupants, wherein the distance is a priori defined, for example, by location of a chair or a work place, the controller has all the necessary information for removal of the exhaled portions or replacement thereof with a new portion of air at the right moment with the desired phase so that at the moment when the exhaled air reaches air outlets, a suction fan would be turned on and a blowing fan on the contrary should be turned on with advance which is necessary for the stream of replacing air to pass from the air inlets to the respiratory organs of the occupants (people). Exactly in this way should be understood the above mentioned adaptation to the respiratory rate - that is as an ability and the means to synchronize the operation of air exhaust means and air supply means with respiration, its time period, the changes of this period, delay of the spread in order to extract mainly the exhaled air and to replace mainly the just removed portion of air with an ambient air and/or air regenerated by the climate control system.

It is clear that the flows of exhaled and inhaled air should be separated spatially or in time unless the streams of inhaled air are used to form the exhaled air flow (see below). In fact, since the input of the controller is fed with the output signals from the group of sensors, within a few seconds after switch-on by measuring the period of the sensors' output signals it is possible to register an exhale or to determine that there is no increase in concentration of carbon dioxide (CO₂) or that it is steady and to keep searching accordingly the direction where the fact of exhalation would be registered (for example, by controlling the rotation angle of outlets of the air exhaust means with carbon dioxide (CO₂) sensors placed inside the said means and/or humidity sensors or by transferring these means in the mode "always-on").

Furthermore, as noted above, the position of the occupant in the room relative to the outlets of the air exhaust means or the delay between the signals of the various sensors of the group (e.g., of an accelerometer or an ultrasonic sensor which detects the interface between the air layers with different concentrations of moisture, and of carbon dioxide (CO₂) sensor) allow to determine or calculate a necessary interval for spread of the exhaled air portion to the outlets of the air exhaust means and from the air inlets to the respiratory organs. It is clear that all calculations, operations, actions described herein are done by the above mentioned controls, in particular, by the controller or other control and automation means that are related to the considered ventilation system and/or are a part of climate control system.

If the sensing element also comprises video cameras and movement sensors, it additionally means that image analysis allows to determine not only a position and movements of the occupants but also to conclude about movements of the indoor air masses (e.g., based on deviations and fluctuations of curtains, various hanging objects, etc.) and about the correctness of the ventilation modes selected by the controller in terms of the intensity and direction of the streams. The same purpose may be served by any type of motion sensors that detect not only the movement of people or animals in their vicinity but also the similar fluctuations of freely hanging interior items in areas, for example, not accessible for video surveillance (located also under or above the furniture, in narrow spaces, etc.). Thus, if the motion sensor is made in the form of an accelerometer on the suspension, its own vibrations induced by airflows will be registered for getting the indirect information about them; and if the motion sensor is performed as an air flow sensor (an impeller with a speed meter, etc.), the flow rate data can be directly obtained for the intelligent management and optimal ventilation of the interior.

Another feature of the first variant of the claimed ventilation system is the means to form a stream or a portion of the exhaled air so that it does not spread all over the interior but would be transported in the most compact way from the respiratory organs to the air outlets. These means may include blast deflectors or mechanical deflectors that swirl a flow of exhaled air and limit its spread. And in the first case it is convenient to use the flows of the indoor air for swirling a stream of the exhaled air, for acceleration and delivery of the next portion to the air outlets, and the ambient air supplied to the interior may be used to cut off another portion of exhaled air, to limit it from the outside, that is to limit its spreading. For example, the forming air flows for exhaust air are directed to the same direction as the air exhaled by an occupant or at an acute angle while the supply air flows from the outside are directed towards or at an obtuse angle.

Tuning the output band-pass filters of the group sensors to the respiratory rate bandwidth means that these filters pass a signal at frequencies typical for the respiratory rate and cut off the signals of other frequencies, first of all the higher ones, that increases noise immunity of the system in whole; or that the filters sort out the information about the events of an inhale or an exhale by means of an algorithmic method in the controller.

Another feature of the first variant of the claimed ventilation systems is that in case of its use in a vehicle interior the means of air supply to the vehicle interior may be provided with an input analyzer of the ambient air composition connected to the controls that manage the air supply to the vehicle interior. As a result, the said controls are able to decide whether to let an intake of the next portion of ambient air at the moment or to delay it until the moment when the car reaches less polluted area, or to take in a full portion or its part, etc. In the simplest case such decision can be taken on the fact of exceeding of concentration of carbon monoxide (CO) or carbon dioxide (CO₂) in the outside air.

The above said configuration of the controller for determining the presence or absence of occupants in the room implies an algorithmic or hardware possibility to form therein a corresponding signal, a configuration of hardware or software in such a way that if there is nobody indoors, one signal (code, command) is formed on input buses of the controller, if the occupants are indoors, another signal is formed. It is clear that both of these methods can be combined in a single controller and just like all other said features and differences can be used in any combination.

The means of registration of background sounds, sound picture and active or passive means of noise cancellation are well known and widely used and are not described .We merely specify that their use in conjunction with a selective ventilation system or as its part allows to achieve almost a complete silence in the room, as it is evident from the aforesaid that in the proposed solution the means of air exhaust and air supply pump less air volume than usual systems and can operate in continuous or pulsed mode (inhale-exhale) which is formed by the control means. This, in turn, allows to suppress the noise more efficiently by passive means or to suppress it actively, also due to the synchronization with operation of the system's elements emitting the noise (for this purpose the means of active noise reduction may be connected to a corresponding output of the controller of the control means through a timing input), to actively suppress the noise generated in vents and ducts (when the air portion extraction or supply is intensive and pulse) with high efficiency. The active suppression is also effective to silence an external (outdoor) noise penetrating, for example, via air ducts into the room.

Positioning the means of air exhaust according to usual location of the occupants implies that the air outlets are set, for example, on the desktop in the office room, at that place where the air stream exhaled by a person sitting at the desktop is directed in natural way. Similarly, if after studying the usual trajectories of the staff the most accustomed paths are identified, the means of air exhaust may be placed along these paths and be adapted to directions of the exhaled air streams to extract the exhalation products. Further, all of the same may be done in dynamics, if the controller receives the information from the group of sensors that allows tracking the current position and the parameters of motion (movements) of the personnel. Fixing the position and the motion parameters, the controls (the controller) are able to predict an optimal location (position) and direction of points of air exhaust (or air supply) and by sending the appropriate control signals to the actuators responsible for switching valves in air ducts or changing the angle of rotation of a corresponding guide socket they are able to exercise dynamically the selective exhaust (extraction) of the exhalation products and replace them with air supply portions of the least polluted air.

Moreover, as already noted, the elements of the system such as air outlets (intakes) for removing the exhalation products, air ducts, forming nozzles, etc. are reasonable to integrate (to build in) into workplaces (workstations), armchairs, sports simulators and other exercise equipment, furniture, the pieces of which are fixed or mobile near the respiration organs of the person (the occupant) next to them. Thus, in the case of sports training apparatus the air outlets may be located on their front panel, near the palm rests, headrests, etc., while the air ducts should be integrated into hollow parts of the structures with the appropriate placement of the connection points and connectors on their bottom or rear. Similar modifications allow turning a piece of furniture (especially a stationary one) into a functional element of the considered ventilation system that also improves the indoor environment.

The elements of energy recuperation (for example, heat exchange chambers) should be disposed between the closely spaced air ducts for air supply and air exhaust. Taking into account the small volumes of extracted and supplied portions of air in the claimed proposal and, consequently, the time available to heat exchange, the recuperation allows to eliminate heaters usually engaged heated outdoor air in the cold season.

For the same reasons, the claimed system according to the first variant provides an opportunity to embed the means of air exhaust and the means of air supply into window units (a sill, for example). This becomes possible due to the small volume of pumped air.

The essence of the second variant of the claimed system is that the means of air exhaust are spatially located in areas where the air streams exhaled by passengers in a vehicle interior or people in a room - the air enriched of exhalation products - are distributed or allocated. As a result from the vehicle interior or the room, or rather from those areas or zones of spread of the exhaled air contaminated by vital activity products (primarily by carbon dioxide CO₂) the said contaminated air is taken out before it has mixed with the rest of the indoor air so there is practically no need to replace a whole but only to replace a limited amount of air taken away from the said areas.

In the existing solutions of ventilation systems, the indoor air intake (for removal via means of air exhaust) is global (general) and on the contrary the fresh air supply is individual and as close to the consumer as possible. The most of the systems are configured (designed) like that, if we are not talking about the masks for breathing and other types of breathing apparatus with special ways of removing exhalation products. In the second variant of the claimed systems, on the contrary, the air inflow may be anything, but the air exhaust (extraction, removal) is carried out individually. As a result, such a ventilation system is characterized by reduced air supply while preserving or even increasing a comfort for a person - that is important both in the polluted environment and when the limited air supply is used to increase the time of quasi-autonomy of a vehicle interior, a cabin, a room or other interior also in the internal recirculation mode.

The air with exhalation products is exhaust from a spatial or geometric area of direct spread of the exhalation products. And since there are two types of breathing typical for a person with uncovered face (without a mask), two zones with the highest concentration of the exhalation products (including CO₂, H₂O, a nitrogen-oxygen mixture where the content of O₂ is reduced to 16% and other elements of exhalation) should be identified:
a) for time intervals of nasal breathing for a person who does not tilt his head this zone is located in the direction from a nose along a torso (vertically and at a slight angle), it extends from a chin to an abdomen and hips (from the level of the chin down to 75-80 cm, and at width of 50 cm (25 cm to the side of the axis) - as a parallelepiped, a cylinder or a cone (depending on surrounding objects and flows);
b) for a talking person with mouth breathing the said geometric area is located in the front, in front of a neck and a lower part of face and extends to the same distance.

It should be noted that the exact values of the said distances and angles are not critical. The effect is achieved due to the fact that the exhalation products entering a space sector in front of the respiratory organs of every person are exhausted by means of, for example, that the supplied air creates excessive pressure indoors, so the extraction of exhaled air portions occurs spontaneously. It may also be executed by special means arranged stationary, when the mode of ventilation is replaced with the exhaust ventilation, wherein the exhaust air is extracted at the points of placing people where the air exhaled by them falls and the air inflow may be, on the contrary, both individual and common, stationary positioned, for example, from above.

Additionally, saying that the zone of the spread of the exhaled air flow may be formed by the means of flow formation located in the area of the direct spread of the exhaled air, we imply that the means of air exhaust "originates" from this latter area and that the exhaled air flow is taken out by them from the zone of the immediate spread to the zone of the exhaust. All other variations are limited with a combination of zones of spread, taking into account the position and turn of a head of the person as well as the influence of external deflecting objects and air streams.

When designing devices and needs of switching between the said areas for better extraction of exhalation products, in addition to video sensors determining the position of a face, one can use, for instance, microphones for better extraction of exhalation products providing a switch between the zones by a fact of a voice or a specific sound of mouth breathing.

As already mentioned, the second variant of the claimed system relates to the ventilation systems operating with a reduced volume of external inflows and it gives maximum effect in the case of cabins, vehicle interiors and building interiors where for whatever reasons the fresh air supply is limited but the occupants are without masks, respirators and other means placed on their respiratory organs. However, this does not mean that everything said below cannot be extended to this case, if it is possible to take into account the spatial topology of the spread of the exhalation products and to adjust accordingly the geometric zones of location of devices for extracting these products.

Thus, the embodiments of the claimed ventilation system may be classified as follows:
a) a "passive" system, where the air is removed constantly or by pulse from geometric (space) zones with a higher concentration of exhalation products (thus for the sitting people with nasal breathing these zones are between a chin and an abdomen). At the same time the air supply compensated for air exhaust in a correct proportion and is directed, for example, at the upper part of the head/face. The means of air supply and/or air exhaust provide the pressure drop necessary for operation of the system. The sensors may be absent;
b) an "active" system - is similar to a), wherein a flow formation by appropriate devices (nozzles, guides) promotes improving of the air extraction conditions what allows to extract the exhalation products inside and even outside of the geometric zone in convenient directions. The sensors may be absent;
c) an "adaptive" system - is similar to a) or b), additionally completed with mechanic, electronic, optical or other sensors like a position sensor, a displacement sensor, transducers, pressure sensors, a sound pressure sensor, a sensor of the concentration, etc., that allows to change a direction of the streams, guides (of parameters and vortices) and to switch between the zones when the direction of breathing or the person's position (including head movements and motion indoors) has changed;
d) a "synchronous" system - is similar to a), b) or c), equipped with electronic, mechanical, optical, chemical and other sensors detecting the presence of people and/or a fact of respiration (including a local increase in concentration of exhalation products), wherein the air extraction is additionally synchronized with a respiratory rhythm and exactly the portions of air with maximum concentration of exhalation products (above a threshold level) are extracted from the geometric zones nearby the person to minimize the necessary air for replacement.

It is reasonable to place the air outlets for air exhaust at the intersection of the said geometric zones of the spread of the exhalation masses with different objects and surfaces of the room (interior) located in this space. And some of the objects may acquire additional function of ventilation elements. Let us consider a few specific embodiments of the systems.

In case of a computer workstation or other indoor workplace - in accordance with the above mentioned geometric zones the air outlets may be placed at the following locations:
- the bottom edge of PC monitor;
- a computer keyboard;
- the front edge of a desk;
- a mat (pad) for a desktop;
- a cushion or a pad on a seat / armchair / lap;
- the front of sofa cushions and armrests;
- a tablecloth, a writing set or any other device (including for a few person) for a table or a desk,

In case of a hospital, a waiting room, a gym:
- a bedside table and design elements of beds and chairs;
- items of medical equipment for monitoring and therapeutic procedures;
- individual lighting, rods and bars of holders, armrests;
- the front of sofa cushions and armchairs;
- elements of sports simulators and exercise equipment falling within or located nearby the geometric zone of spread;
- a mobile robotic device used both for exhausting and extracting the air and for optimization of the topology of streams (vortices) in the room;

In case of a (concert) hall:
- backsides of the front seats while a folding seat may be equipped with an individual mechanical valve that would open an air outlet and an air duct when the seat opens;
- folding tables or bars between seat armrests.

In case of a vehicle:
- a seat belt (a pad on the strap, a fastener of the strap);
- the rear surface of a backrest in the middle and lower part thereof (for passengers of the second and subsequent rows);
- the bottom of a steering wheel, on the front panel;

In case of alarm systems for elevators and similar closed cabins:
- a panel with buttons for calling a dispatcher or a special panel of intercoms, which passengers are asked to face in the case of long-term emergency stop.

In case of an office space, at workplaces:
- a control panel surface;
- working clothes.

Furthermore, in many cases the occupants (passengers, audience, etc.) may be offered a personal air exhaust means, for example:
- a decorative item in form of a rubber or a soft toy connected via a thin hose with the system and which may be held on the abdomen or on the occupant's lap.

Note also that in cases when the connection of air ducts to the subjects used as the air exhaust elements of the ventilation system is not desirable, they may be equipped with a self-contained unit to transmit the dialed volume remotely - by a narrow-directed stream to an outlet.

The means of air exhaust described above should be combined with the means of air supply compensating for exhaust air volumes. Thus, the means of air supply may be common and shared (vents in the ceiling, for example) - since the breathing process itself in case of removal and exhaust of expiration products creates the right direction of inflow of fresh air masses. But, of course, they may be also individual - in this case they should be disposed and oriented from the top, with airflows directed to the upper part of the person's head and on condition of "not overlapping", not crossing the flows with exhaled air stream.

In all cases the air exhaust process may be either active (with a pump that creates a suction pressure and sucks the exhalation products out of the geometric zone) or passive, if the air supply creates the necessary overpressure to remove the products.

In addition to improving a self-contained life, reduced air supply allows better filtering of supplying air and facilitates the air recuperation process.

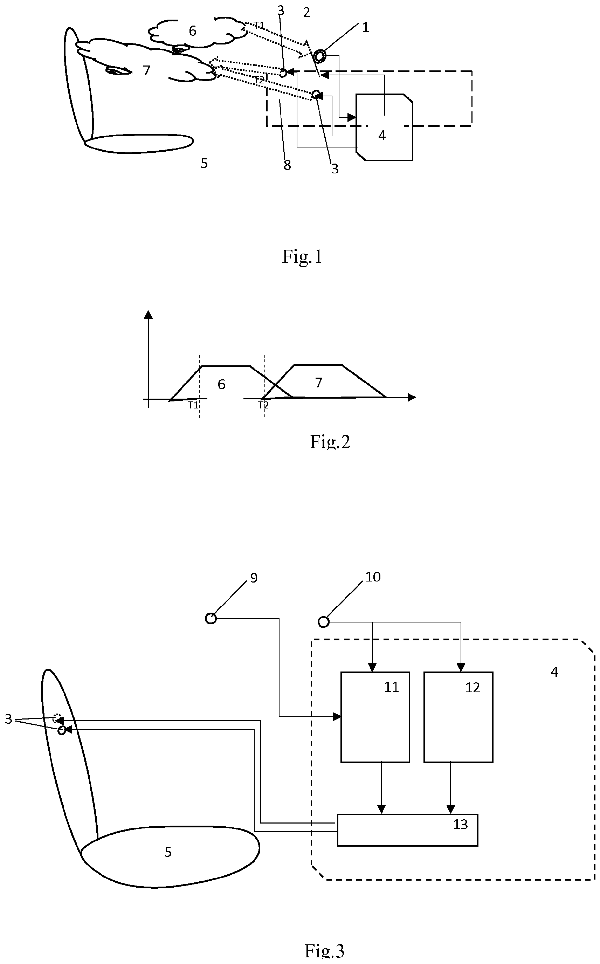

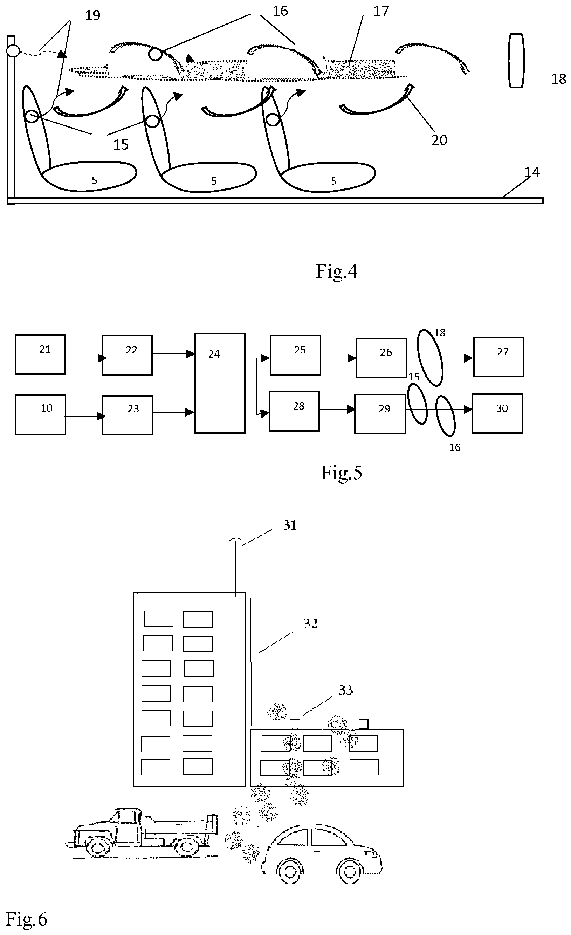

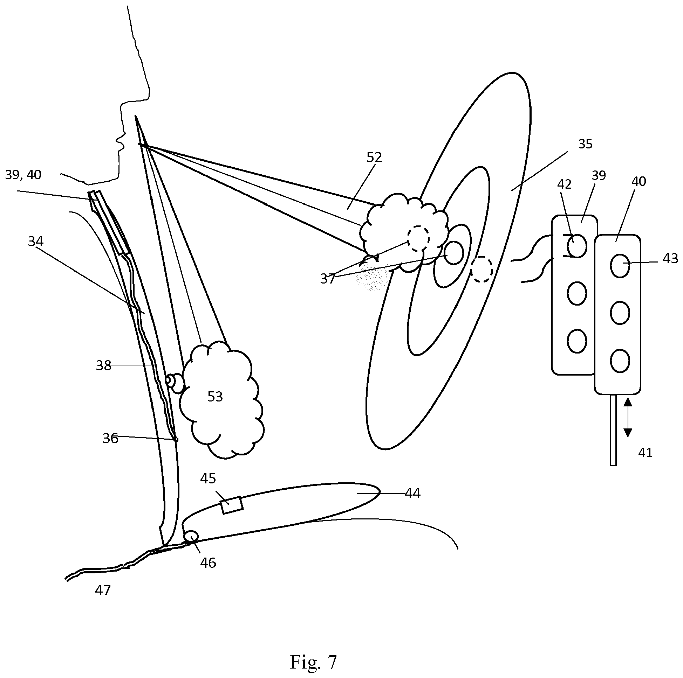

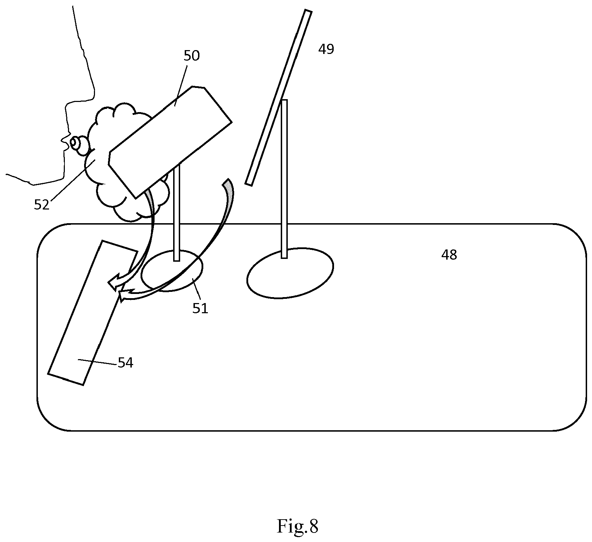

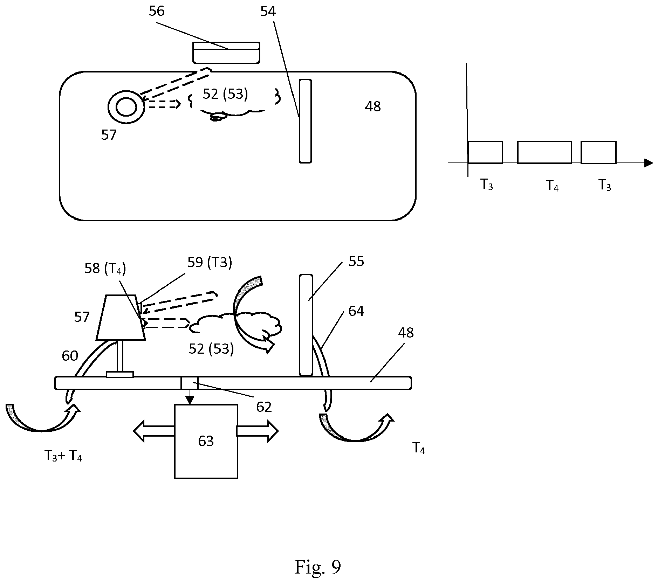

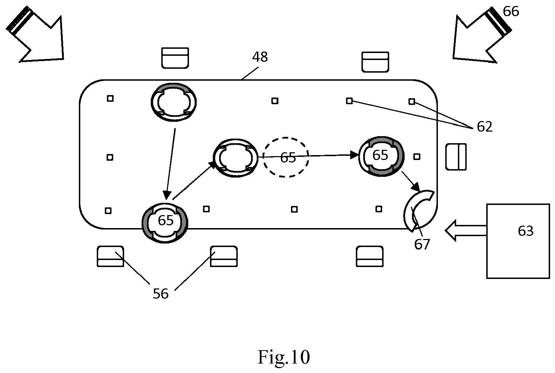

The claimed variants are illustrated in following figures: Fig. 1 - a scheme of the first variant of the system (by the example a workplace); Fig. 2 - a timing diagram of the ventilation system according to Fig. 1; Fig. 3 - a practical embodiment of the system according to Fig. 3; Fig.4 - schematic diagram of air exhaust from the interior using the system according to Fig. 1 (by the example of a cinema hall); Fig.5 - a detailed block diagram of the embodiment of the system according to Fig.1 or Fig.4; Fig. 6 - scheme of use of the first variant of the claimed system; Fig.7 - scheme of use of the system according to the second variant of the claimed systems (by the example of a vehicle), Fig.8 - a schematic diagram showing a "zone of immediate spread" expanding to a "zone of spread of the exhaled air stream" (for the second variant of the claimed system); Fig.9 - an embodiment of the flow forming means in the form of elements of the means of clean air supply (with reference to the second variant of the claimed system); Fig.10 - a scheme of practical example of embodiment of the second variant of the claimed system.

Referring to Fig.1 the first variant of the system comprises a sensing element 1, the means of air exhaust from the interior 2, the means of air supply 3 to the interior, the controls (a controller) 4, wherein an office worker is in an armchair 5, mark 6 denotes a portion of air exhaled by the person and mark 7 denotes a portion of inhaled air. Elements 1-3 are placed (in the variant shown in Fig.1) on a desktop 8(schematically shown by the dashed line). Referring to Fig.2, T1 is the moment when the portion 6 of exhaled air reaches the sensing element 1 whose signal is analyzed by the controller 4 which switches on the means of air exhaust 2 almost at the same moment T1. Mark T2 denotes the moment when the controller 4 switches on the air supply means 3 for cut-off and replacement of the exhaled air portion 6 with inhaled air portion 7.

Referring to Fig.3, in practical embodiment of the system according to Fig.1, the sensing element 1 may be designed as a group of sensors, that is an infrared radiation or ultrasonic sensor 9 located, for example, over the armchair 5 and registering the moment of exhalation and a carbon dioxide (CO₂) sensor 10 disposed on the desktop 8 and actuated when the portion of exhaled air 6 reaches its sensitive surface. An interval measurement unit 11 registers the current value of the time interval between the signals of sensors 9 and 10 and a frequency measurement unit 12 registers a frequency of the signal of sensor 10 (a respiratory rate, wherein an averaging for several periods is possible in the block). Information about the values of the said interval and frequency is transmitted to an inlet control unit 13 that sums up the time interval between the signals of sensors 9 and 10 and interval between operations of the sensor 10 (inverse to the respiratory rate) and switches on the means of air supply 3 to the interior, installed in this example in the sides of the armchair 5. As shown in Fig.3 the output of the sensor 9 is connected to the first input of the unit 11, the outputs of sensors 9, 10 are respectively connected to the second input of the unit 11 and the input of the unit 12, the outputs of units 11 and 12 are connected to the inputs of the unit 13 whose outputs are connected to the control inputs of the air supply means 3 and the units 11-13 form the controller 4.

As noted above, the means of air exhaust from the interior may be provided with forming elements for the subsequent extraction of air stream exhaled by people indoors. The formation process is explained in Fig.4 that illustrates a configuration of the means of air exhaust from the interior for use in a cinema hall 14 where the seats 5 are mounted one after another. The right injection nozzles 15 are arranged in the sidewalls of the seats 5, the injection nozzles 16 from the opposite side of the seats may be arranged in the walls of the hall 14, as shown in Fig. 4, wherein the nozzles 15 and 16 are directed in such a way to swirl a flow of the exhaled air 17 and to direct it to an outlet 18 with an exhaust fan mounted behind (not shown). In Fig.4. a direction of air releasing from the nozzles 15, 16 is indicated with arrows 19, the directions of swirling (forming) the flow 17 shown with arrows 20. If the air from the cinema hall 14 is supplied to the nozzles 15, 16, the air supply to the hall 14 is performed by other separately provided means. However, if the means of air supply to the hall 14 are also designed to operate as the forming elements for the subsequent removal of the exhaled air stream, the extra energy saving will be achieved. The operating conditions and a composition of the ambient air at the moment determines which one of the two mentioned variants or modes would be selected when both of them are envisaged in the hall 14. The decision may be made either by the designing engineers or by the controller 4, wherein the latter should just determine if the supply volume of outside air is sufficient to replace the exhaled air at a moment. If it is sufficient, the controller 4 activates a supply of outside air to the nozzles 15, 16 (not shown in Fig.4) by adjusting the air flows by changing the modes of inlet fans and position of shutters, if not - it supplies a mixture of outdoor and indoor air from the hall 14 or only indoor air. It should be noted that the means serving this purpose are widely known and used in ventilation and air-conditioning systems. Moreover, the known algorithms and the means for constructing of ventilation systems allow to synthesize the controls that may be proposed for any of the above described operation algorithms (variants of system construction) and their combinations.

Further we shall describe more detailed block diagram of embodiment of the proposed system (with reference to Fig.5).

The exhalation is registered by matching the output signals of the sensor 10 and an acoustic sensor 21. For this purpose outputs of these sensors via appropriate band-pass filters 22 and 23which are adjusted to pass a respiratory rate bandwidth and to form potential output signals come to a comparison circuit 24, output of which controls the respective valves 26 and 29 via a delay circuits (schemes) 25 and 28 (τ28 <τ25, where τ - a delay of the appropriate element). The first valve is mounted on an air duct of a vacuum unit 27 and the second one is mounted on the ducts of an air pressure unit 30. The air pressure in the unit 27 is less then atmospheric pressure and the air pressure in the unit 30 is higher than atmospheric pressure, so, first, the portion of fresh air with delay τ28 begins to flow from the unit 30 through the nozzles 15, 16 into the hall 14, and then the unit 27 with the delay τ25 begins to suck the portion of air 6 exhaled by the spectator through the outlet 18.

Fig.6 shows an example of applying the first variant of the claimed system in a low-rise building with windows facing the highway. The air intake opening 31 is mounted along the wall of a neighboring house with the aid of an air duct 32 of small cross-section on the maximum distance and to the area of free movement of air masses, so it is significantly higher than a regular air intake of a large cross-section 33 located at the roof above the building interiors in the space contaminated by exhaust fumes.

Thus the system according to the first of the claimed variants comprises the means of forming a suction stream, acting in the direction of exhalation or appropriately correcting the direction of flow for selective absorption of the human's exhaled air masses. These elements of the system may be placed on any surfaces including moving things. However, their operation may be both continuous and in a pulse mode and focused on the fact of inhalation/exhalation (which is easily measured by various sensors remotely) and / or on the respiratory rhythm. Then on inhalation the fresh air inflow are supplied and the suction process of the exhalation stream is optimized (for example, by way of making a discharge in the vicinity of the nearest air outlet).

The air supply of such ventilation system may be aimed not only at providing comfort but also at the correct formation of streams (vortices) to increase the exhaust of exhaled masses (i.e., the elements of the ventilation system are arranged with this in mind, and a pulsating mode of air supply may also be used on forecast of inhalation).

Even if there are no elements of air regeneration and replenishment of oxygen supplies allowing to avoid a contact with the external environment for some time (i.e. when a simplified system with a supply of, for example, filtered outdoor air is used), the technical result is a significant reduction of the incoming outdoor air with all its harmful components and increase of a breathing comfort. The necessary set of sensors (that is the ambient air composition sensors for determining concentration of CO₂ (carbon dioxide), O₂ (oxygen), CO (carbon monoxide), etc.) may be used to properly adjust the air intake under varying ambient conditions for safety reasons (if the environmental conditions are worsened, it would be reasonable to switch temporarily to an internal circulation mode or reserves (of compressed air or oxygen) instead of consuming polluted outdoor air). It is clear that all said above does not exclude an existence of additional air intakes in the system, the cross-sections of which allow an intensive ventilation with a minimum time of cleaning the air in a polluted interior.

Due to a substantial reduction of the pumped volumes of outdoor air in a normal operation mode even for the simple variants of the claimed system (up to several liters per second in case of a few people indoors), it is possible to use the small cross-section air intakes for air supply and to mount them as high as possible. Thus, an air intake could be a thin pipe placed along the nearest wall of the neighboring high-rise building without spoiling appearance of the last one or a high hollow lightning rod or other element placed high above the roof of the building in the area of free movements of fresh air masses - it is hard to achieve all that in case of regular ventilation volumes and modes.

Fig. 7 illustrates the use of the second variant of the claimed system (by the example of a vehicle interior). In Fig.7 the clean air supply means are not indicated - it can be an inflow blowing a windshield or an other one oriented preferably from the top and side, while the air outlets are arranged on a seat belt 34 and on a steering wheel 35 (at the inner side and at the central part thereof) and consist of an air outlets 36 and 37 respectively connected via corresponding air ducts (at the seat belt 34 the air duct is indicated with mark 38, at the steering wheel 35 it is not shown) to an exhaust pump (not shown) that sucks the air streams polluted by waste products of respiration (an air flow typical for nasal breathing is taken out via the air outlets 36, an air flow typical for mouth breathing is taken out via the outlets 37). For this embodiment, when the air outlets 36 are placed in the seat belt 34, the synchronization means for extracting exhalation portions may be mechanical and made, for example, in the form of plates 39, 40 (they are separately shown to the right in Fig.7) mounted closer to an anchor point of the seat belt 34. The plate 39 is motionless and the plate 40 is fixed with displacement possibility when the seat belt 34 is pulled (for example, as a result of breathing of a driver)by means of a rod 41 which is shifted due to the additional tension of the seat belt 34. The said displacement causes that holes 42 in the plate 39 no longer coincide with holes 43 in the plate 40 and the air is pumped out via the air outlets 36 in the seat belt 34 only on exhalation. The initial relative position of the plates 39 and 40 shall be set by the driver after fastening the seat belt 34 at full inhalation or full exhalation by fixing the plates 39, 40 in position "start of inhalation and of overlapping the holes 42, 43" or "start of exhalation and the end of overlapping holes 42, 43" respectively.

In other variant also shown in Fig.7 there is a cushion (or a soft toy) 44 on lap of a driver or a passenger. The said cushion is equipped with a respiration sensor 45 that controls the operation of the valve 46 at the inlet of the flexible hose 47 connected to the suction pump.

Fig.8 illustrates in which way the means of flow formation placed in the zone of "immediate spread of the exhaled air stream" enlarge this zone to "the zone of spread of the exhaled air stream" (see above). A monitor 49 is installed on the user's desktop 48 and a passive screen 50 is mounted on a support 51 serving as a reflector of exhaled air flow 52 (the flow belonging to nasal type of breathing is shown below as 53 - see Fig. 9). The flows 52 and 53 are present in the zones of immediate spread of the flows extending from the respiratory organs within 75-80 cm in the direction of the exhalation. As indicated by the arrows in Fig.2, the reflector 50 and monitor 49, working in this case as the means of flow formation located in the zone of the immediate spread of exhaled air stream, re-direct the exhaled air stream to the air outlet (shutters) 54, thereby forming the zone of spread of exhaled air along the whole path of exhaled air stream.

Fig. 9 illustrates the implementation of the means of flow formation as elements of the means of clean air supply. The air inlets 54 are located in a pole 55, the user is in a chair 56. There is a lamp 57 to the right of the user, the lamp is provided with nozzles 58, 59 for fresh air supply. The air supply to a duct 60 is carried out within intervals T3 and T4 (which correspond to the user's inhalation and exhalation) or continuously and the nozzle 58 supplies a portion of clean air within the interval T4, and the nozzle 59 - within the interval T3. The pole 55 is connected to the air exhaust means via an air duct 64. However, as noted above, it is possible to form or redirect the flow of captured air using the indoor air or the streams of already captured polluted air which goes to the air outlets with new air portions.

These intervals are registered by a sensor 62, whose output is connected to a data input of the controller 63 that controls the means of clean air supply and the means of dirty air exhaust (shown schematically by the arrows in Fig.9).

An example in Fig.10 shows the sensors 62 installed on a conference table 48, wherein the sensors are remotely connected to the controller 63 that controls (also remotely) an operation, that is a position of partitioned mobile units for polluted air exhaust 65 on the conference table 48 and their state ("on-off'). The switched-on sections of the units for polluted air exhaust65 are blacked out in Fig. 10. Only the chairs 56 occupied by office workers are shown around the conference table 48. Mark 66 denotes the total air supply for this room. In the initial state the air exhaust units 65 occupy a neutral position in the center of the table (shown by a dotted line). As the room becomes crowded the controller 63 positions them and turns on the sections based on the conditions of most complete exhaust of air portions exhaled by workers. It is clear that the exhaust units may be configured to overcome or go around the plane obstacles (notebooks, for example) and be connected to a common exhaust system via flexible hoses or to transmit narrowly focused pulsed contaminated air flows from one unit to another (shown by arrows) and then to a common air exhaust unit 67. For this the controller uses the sections not operating for air exhaust or not active at that moment (within the intervals between activations). This is a way of the ventilation system to detect the position of living beings (users) indoors.

Therefore, the second variant of the claimed ventilation system provides the long intervals of isolation of building or vehicle interiors from the outdoor air inflow in case of ambient air pollution. This is achieved not by excessive inflow of oxygen but due to the extraction of exhalation products that are purposefully exhausted from recirculation.

In case of a seat belt the ventilation elements which are designed as the vents and ducts for air exhaust and/or supply may be constructively arranged in the seat belt without affecting its strength. They may also be made in the form of overlay elements. In this case the seat belt acts as a supporting structure and when it is fastened (or hanged free aside), it may place these elements in correct position relative to the respiratory organs of the occupant.

As mentioned above, these elements may be configured to adapt to a respiratory rate of a person sitting in this seat - for example, based on changing of the seat belt tension induced by a moving chest.

The seat belt with ventilation elements in the form of vents and ducts for air exhaust and / or air supply may be configured with flow (stream) forming elements and/or structural elements improving the proportion of extraction of exhaled products including the ones made in the form of a plastic bib with a curved edge.

A similar air intake element in the form of a "basket" with nozzles may be placed at a lower part of a steering wheel and configured with ducts distributed through the steering wheel and steering column either with no sensors at all or with a sensor of change of position of the occupant's belly or chest of the following types:
- mechanical type (for example, in the form of a fringe of elastic strips touching the front part of the body);
- optical (by analogy with autofocus in cameras);
- ultrasonic (to measure a change in the distance based on the reflection); and others.

The same air intake element may be made in the form of an apron on the seat or in the form of a protruding edge of a pillow with holes that are placed in direction from the nose of the occupant vertically down, wherein the arrangement of ducts is performed through the seat anchorages, for example. In this case a simple optical sensor may be added to the mentioned above ones. The optical sensor can response for example, to a change of a shadow (from a light source located at an angle) felling from the front part of the body during movements of a chest and belly.

All the above-mentioned variants and many others can be constructed based on the essence of the invention and mentioned examples. The claimed features provide a high degree of autonomy and efficiency of the variants of ventilation system.

## Claims

1. A ventilation system with exhaust of exhaled air comprising a sensing element connected to a control input of the controls of the means of air exhaust or air cleaning for building interiors and **characterized in that** the sensing element is configured to detect the presence and/or position of people and/or animals indoors and the means of air exhaust or air cleaning and/or their controls are configured to extract or clean mainly the portions of air with maximum content of exhalation products of people and/or animals being indoors.

2. The system according to claim 1, **characterized in that** it comprises additionally the means of air supply to the building interior and their controls.

3. The system according to claims 1 or 2, **characterized in that** the means of air exhaust from the building interior and/or the means of air supply to the building interior are configured to adapt to respiratory rate of people or animals being indoors and/or to a delay of spread of the exhaled and inhaled portion of air.

4. The system according to claim 2, **characterized in that** the means of air supply to the building interior are performed as forming elements for subsequent exhaust of an exhaled air stream.

5. The system according to claim 2, **characterized in that** the means of air supply to the building interior are configured to replace only a portion of air extracted from the building interior by the means of air exhaust.

6. The system according to claim 2, **characterized in that** the means of air supply to the building interior comprise an input analyzer of ambient air composition which is connected to the controls of the means of air supply to the building interior.

7. The system according to claim 2, **characterized in that** the air inlets of the means of air supply to the building interior are located with a possibility to take the air from the low pollution area.

8. The system according to claim 1, **characterized in that** the sensing element is formed by a group of gas sensors or sensors of partial pressure of gases and vapors indoors.

9. The system according to claim 1, **characterized in that** the sensing element is formed by a group of sensors of carbon dioxide (CO₂) and/or oxygen (O₂) and/or humidity and/or pressure and/or infrared radiation and/or temperature and/or sound and ultrasonic waves and/or by a video camera or a group of video cameras and/or the motion sensors.

10. The system according to claims 8 or 9, **characterized in that** the sensors of the group are provided with an output filter tuned to the respiratory rate bandwidth.

11. The system according to claim 1, **characterized in that** the means of air exhaust from the building interior comprise the forming elements for the subsequent exhaust of portions of air exhaled by people or animals being indoors.

12. The system according to any of the claims 1-9, **characterized in that** the controls of the means of air exhaust from the building interior and/or the controls of the means of air supply to the building interior and/or the means to adapt to the respiration rhythm of people and animals and/or to the delay of spread of exhaled and inhaled portions of air and/or the controls of the forming elements and of subsequent exhaust of the exhaled air stream and/or the means of choosing and analyzing information from the group of sensors and/or the means of filtering the output information from the group of sensors and/or the means to process the information from the analyzer of the ambient air composition may be combined into a controller or may be a part of the controller that controls the operation of the ventilation system.

13. The system according to claim 12, **characterized in that** the sensing element and the controller are configured to detect the absence of people or animals indoors and the controller is configured to give a command to the means of air exhaust or air cleaning and/or to the means of air supply for step increasing of ventilation intensity for this period.

14. The system according to claim 12, **characterized in that** the controller may be configured to detect the presence of people or animals based on a signal of increasing carbon dioxide (CO₂) indoors from the appropriate sensor regardless of a content, presence or absence of information from the other sensors and information sources and to detect the absence of people and animals indoors on a signal of decreasing carbon dioxide (CO₂) indoors from the appropriate sensor regardless of a content, presence or absence of information from the other sensors and information sources.

15. The system according to claims 1 or 2, **characterized in that** it is additionally provided with the means to register and analyze a sound background and is configured with active and/or passive cancelation of noise from the means of air exhaust from the building interior and/or the means of air supply to the building interior using the information on registered sound pattern.

16. The system according to claim 1, **characterized in that** the means of air exhaust are located based on the usual location of people and animals indoors, their movement and direction of their respiration.

17. The system according to claims 2 or 16, **characterized in that** the means of air supply are located based on the usual location and/or movement of people and animals indoors and under conditions of not overlaying the streams of the exhaust air.

18. The system according to any of claims 1, 2 or 16, **characterized in that** the means of air exhaust and/or the means of air supply are performed fully or partially as elements of sports training apparatus and/or of furniture indoors.

19. The system according to claim 17, **characterized in that** the means of air exhaust and/or the means of air supply are performed partially or completely as elements of sports exercise equipment and/or of furniture indoors.

20. The system according to claims 1 or 2, **characterized in that** the air ducts of the means of air exhaust and air supply to the building interior are provided with air recuperation means.

21. The system according to claim 1 or 2, **characterized in that** the means of air exhaust from the building interior and/or the means of air supply to the building interior are performed fully or partially as elements of a window unit.

22. The system according to claim 20, **characterized in that** the means of air exhaust from the building interior and/or the means of air supply to building interior are performed fully or partially as elements of a window unit.

23. A ventilation system for building and vehicle interiors comprising the means of clean air supply and the means of air exhaust and **characterized in that** the means of air exhaust are made in the form of the means to extract the air polluted by products of respiration and their air intakes are placed in a zone of spread of the exhaled air stream.

24. The system according to claim 23, **characterized in that** the zone of spread of the exhaled air stream is formed by flow formation means placed in the zone of immediate spread of the exhaled air stream.

25. The system according to claim 23, **characterized in that** the flow formation means are performed as elements of the means of air supply including the means of clean air supply or means of recuperation for previously extracted air polluted by exhalation products.

26. The system according to claim 23, **characterized in that** the air intakes may be placed in the zone of spread of the exhaled air stream which belongs to nasal and/or mouth type of breathing.

27. The system according to claim 23, **characterized in that** the means to exhaust the air polluted by exhalation products are performed with ability of periodic actuation.

28. The system according to claim 27, **characterized in that** the means to exhaust the air polluted by exhalation products may be controllable and the ventilation system may be provided with a respiration sensor connected to a control input of the mentioned means.

29. The system according to claim 28, **characterized in that** the respiration sensor is made in the form of a carbon dioxide (CO₂) sensor or a humidity sensor.

30. The system according to claim 28, **characterized in that** the respiration sensor is a respiration rate meter.

31. The system according to claim 23, **characterized in that** the means to exhaust the air polluted by products of respiration are configured to adapt to positions of respiratory organs of any living being indoors.
